Europäisches Patentamt

**European Patent Office**

**Office européen des brevets**

(19)

(11) Numéro de publication: **0 030 991**

**A1**

(12)

# DEMANDE DE BREVET EUROPEEN

(21) Numéro de dépôt: **79870033.2**

(22) Date de dépôt: **21.12.79**

(51) Int. Cl.³: **G 05 D 9/12**
**B 22 D 11/16, B 22 D 39/00**

(43) Date de publication de la demande:
**01.07.81 Bulletin 81/26**

(84) Etats Contractants Désignés:
**AT BE CH DE FR GB IT LU NL SE**

(71) Demandeur: **ATELIERS DE CONSTRUCTIONS
ELECTRIQUES DE CHARLEROI (ACEC) Société Anonyme
54, Chaussée de Charleroi
B-1060 Bruxelles(BE)**

(71) Demandeur: **Société Belge des Produits Réfractaires en
abrégé "Belref" Société Anonym e
Rue de Bréderode, 9
B-1000 Bruxelles(BE)**

(72) Inventeur: **Grosfils, Jules
Grande Rue 157B
B-6422 Laneffe(BE)**

(72) Inventeur: **Josse, Roger
33, Rue Vanderick
B-6150 Forchies-La-Marche(BE)**

(74) Mandataire: **Bossard, Franz et al,
ACEC - Service des Brevets Boîte Postale 4
B-6000 Charleroi(BE)**

(54) **Procédé de commande de processus industriels.**

(57) Procédé de processus industriels dans lequel on règle la quantité de liquide dans un bassin répartiteur dont on désire maintenir sensiblement constant le débit à travers une ouverture de sortie en agissant sur un moteur actionnant un dispositif de positionnement d'une busette (2) réglable placée dans le fond d'un réservoir en amont du bassin répartiteur, caractérisé en ce qu'on règle le temps de mise sous tension du moteur (8) au moyen d'un dispositif calculateur (12), en ce qu'on introduit dans le dispositif calculateur (12) un signal qui est une fonction de la quantité de liquide dans le bassin répartiteur, un signal qui est une fonction de l'ouverture de la busette (2), un signal qui est une fonction de la quantité de liquide quittant le bassin répartiteur et un signal qui est fonction du courant du moteur, en ce qu'on mémorise les écarts entre les valeurs de consigne et les valeurs réellement atteintes d'ouverture de la busette (2) et du débit de liquide pour une ouverture de la busette donnée, et de la course de ralentissement de la partie mobile de la busette (2) et en ce qu'on calcule, à partir de ces données, une consigne de durée de mise sous tension du moteur (8) selon laquelle on commande le moteur (8).

EP 0 030 991 A1

PROCEDE DE COMMANDE DE PROCESSUS INDUSTRIELS.

La présente invention a pour objet un procédé de commande de processus industriels dans lequel on règle, à une valeur comprise entre deux limites prédéterminées, la quantité de liquide dans un bassin répartiteur, dont on désire maintenir sensiblement constant le débit de liquide à travers une ouverture de sortie, en agissant sur un moteur actionnant un dispositif de positionnement d'une busette à ouverture réglable, placée dans le fond d'un réservoir, en amont du bassin répartiteur.

Dans les procédés connus, le dispositif de positionnement est actionné par un appareil de commande à la suite d'interventions manuelles nécessitant une grande expérience et adresse de la part de l'opérateur.

Le but de l'invention est de maîtriser les difficultés particulières de positionnement de la busette au moyen d'un automatisme approprié.

Le procédé suivant l'invention est caractérisé en ce qu'on règle le temps de mise sous tension du moteur actionnant la busette au moyen d'un dispositif calculateur, en ce qu'on introduit dans le dispositif calculateur un signal qui est une fonction de la quantité de liquide dans le bassin répartiteur, un signal qui est une fonction de la position d'ouverture de la busette, un signal qui est une fonction de la quantité de liquide quittant le bassin répartiteur et un signal mesurant l'intensité du courant du moteur, en ce qu'on mémorise les valeurs finales et de départ d'ouverture de la busette lors de chaque opération de positionnement, en ce qu'on calcule au moyen du calculateur et à partir de ces signaux d'entrée et des valeurs mémorisées une valeur de consigne pour la durée de mise sous tension du moteur actionnant la busette et en ce qu'on commande le moteur actionnant la busette en fonction de cette valeur de consigne.

L'invention est décrite ci-dessous par rapport à un exemple d'une

20.13/1767

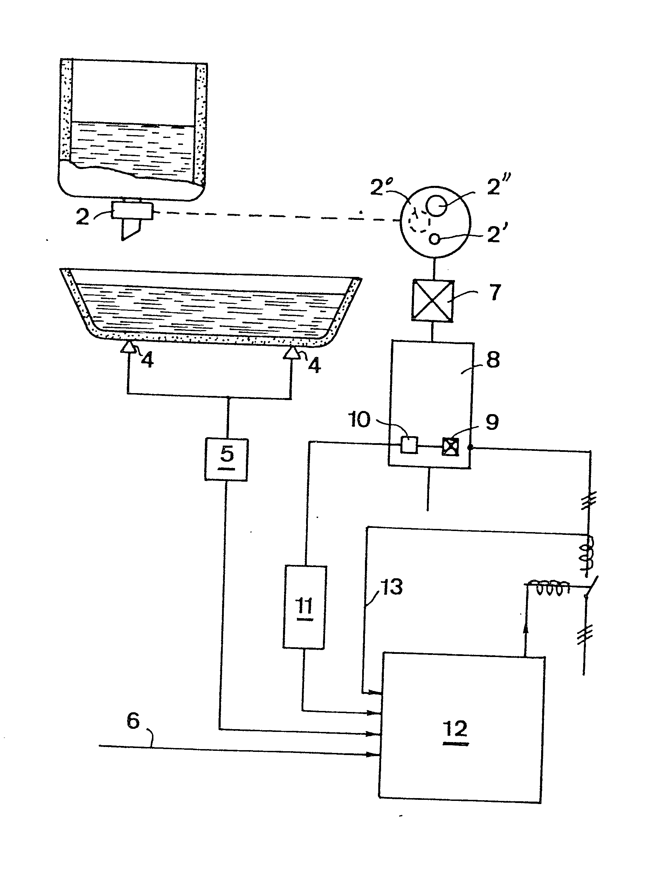

forme d'exécution en se référant au schéma montré dans l'unique figure du dessin.

Un réservoir, en l'occurrence une poche de coulée 1 est équipée d'une busette motorisée 2 comprenant une partie fixe et une partie mobile, rotative par exemple. Cette poche 1 est placée au dessus d'un bassin répartiteur 3 qui alimente, à travers une ouverture, non montrée, une lingotière sans fond, non représentée, servant à la coulée continue.

Le bassin répartiteur 3 est supporté par des jauges de pression 4 reliées à un appareil de mesure 5 du poids du bassin répartiteur 3. La mesure du poids permet de calculer la quantité de métal liquide dans le bassin 3. Elle peut être remplacée ou complétée par d'autres mesures, par exemple par une mesure du niveau, réalisée au moyen d'un ou de plusieurs détecteurs de lumière infrarouge émise par la surface du métal liquide à haute température. L'appareil de mesure 5 peut dans ce cas délivrer un signal qui est une fonction de la quantité de métal liquide dérivé des valeurs mesurées pour le poids du bassin 3 et le niveau du métal liquide dans ce bassin 3. Une autre grandeur dont il faut tenir compte est la quantité de métal quittant le bassin répartiteur 3. Cette quantité peut être mesurée à un endroit approprié de l'installation de coulée continue, en aval du bassin répartiteur. Pour une section donnée d'un produit de laminage obtenu par la coulée continue, la quantité de métal quittant le bassin 3 est par exemple proportionnel à la vitesse de rotation des cylindres à l'endroit de cette section. Un conducteur 6 véhicule un signal qui est fonction de cette quantité de métal.

L'unique figure du dessin comprend aussi un schéma de l'installation dans lequel la busette 2 est représentée d'une part en une vue de côté, en dessous de la poche 1, et d'autre part une vue en plan , montrant en pointillé une ouverture 2° dans sa partie fixe et deux ouvertures en traits pleins, une petite 2' et une grande 2" dans sa partie mobile. La partie mobile de la busette 2 est reliée via un réducteur 7 à un moteur 8. Le moteur 8 est un moteur à courant alternatif d'une exécution spéciale, capable de résister aux températures élevées régnant aux alentours de la busette 2. Comme il est malaisé de mesurer directement la position de la partie mobile de la busette 2, le moteur 8 est accouplé à un réducteur copieur 9, relie à un générateur 10 dans lequel est engendré un signal représentant la position de la busette 2.

Le signal de sortie du générateur 10 est amené via un pupitre 11

3

situé sur la plateforme de ooulée et comprenant différents dispositifs de zérotage, de signalisation et de commande, vers une des entrées d'un dispositif oalculateur 12, D'autres entrées recevant le signal de sortie de l'appareil de mesure 5, le signal véhiculé par le conducteur 6 et un signal représentant l'intensité du courant dans le moteur 8, véhiculé par un conducteur 13 sont prévus sur le calculateur 12.

A partir de ces signaux d'entrée ainsi que de certaines données invariables emmagasinées, le dispositif calculateur 12 élabore les valeurs des grandeurs suivantes; le débit de métal liquide qui s'écoule à travers l'ouverture de la busette, la section libre de la busette, et l'angle de ralentissement que la partie mobile de la busette parcourt après la coupure du courant du moteur 8 ainsi que la durée effective de la mise sous tension du moteur 8. Parmi ces grandeurs, certains sont soumis à des variations dues par exemple à la température et au niveau du métal liquide dans la poche de coulée 1 ou à l'usure de la busette. Cela est le cas notamment du débit du métal liquide à travers une ouverture donnée de la busette et pour l'angle de ralentissement. Le dispositif calculateur est de ce fait équipé de mémoires qui permettent d'enregistrer les valeurs atteintes à chaque opération de positionnement pour les comparer aux valeurs de consigne données et pour corriger les consignes suivantes en fonction des écarts enregistrés précédemment. Comme l'ouverture de la busette 2 est étranglée par les ouvertures mobiles 2' et 2" une fois sur un des bords de l'ouverture fixe 2° et la fois suivante sur l'autre bord de l'ouverture fixe 2°, la mémorisation se fait de préférence séparément pour les positionnements sur l'un ou l'autre bord de l'ouverture fixe 2°.

La commande de la position de la partie mobile de la busette 2 a lieu dès que la quantité de métal liquide dans le bassin répartiteur 3 atteint une limite supérieure ou une limite inférieure donnée ou si une durée limite d'écoulement continu à travers une section étranglée de l'ouverture 2° est dépassée. A chaque commande, l'étranglement de l'ouverture 2° est changé pour le réaliser alternativement une fois sur l'un et une fois sur l'autre bord de cette ouverture 2°. En aucun cas, l'écoulement de métal liquide à travers la busette 2 n'est complètement arrêté pour des durées sensiblement plus longues que le temps de passage de l'ouverture 2" à la place de l'ouverture 2' en face de l'ouverture 2°.

4

Le dispositif calculateur 12 peut assumer en outre des fonctions d'urgence et de sécurité. Par exemple en cas de blocage de la busette, détecté par le calage du moteur et l'absorption de courants trop intenses, le dispositif calculateur commute automatiquement le sens de rotation du moteur et actionne un signal d'alarme.

Dans le but d'augmenter au maximum la durée de vie de la busette, il est important de diminuer les interventions de commande. Pour ce faire, on élabore dans le dispositif calculateur 12 une valeur de la variation du poids du métal liquide dans le bassin répartiteur 3 et/ou une valeur théorique correspondant à la diminution de la pression du métal liquide dans la poche de coulée à l'endroit de la busette 2. La variation du poids du métal liquide dans le bassin répartiteur 3 est représentée par la dérivée du poids du bassin. La valeur théorique correspondant à la diminution de la pression du métal liquide est représentée par l'intégrale par rapport au temps du débit de métal liquide qui traverse la busette ou l'intégrale par rapport au temps de la somme de la quantité du métal quittant le bassin répartiteur et de la quantité de métal dans le bassin répartiteur, calculée à partir du moment où l'on ouvre la busette 2 d'une poche de coulée qui vient d'être mise en place. En tenant compte en supplément d'une ou des deux valeurs ci-dessus, il est possible de calculer et de positionner une ouverture telle de la busette 2 qu'elle n'a pas besoin d'interventions de correction pendant plusieurs minutes et ce même lorsque les bords des ouvertures 2°, 2' et 2" de la busette 2 ont déjà subi des détériorations suite à l'érosion par l'écoulement de métal liquide.

1

REVENDICATIONS

1.   Procédé de processus industriels dans lequel on règle, à une valeur comprise entre deux limites prédéterminées, la quantité de liquide dans un bassin répartiteur (3) dont on désire maintenir sensiblement constant le débit de liquide à travers une ouverture de sortie en agissant sur un moteur actionnant un dispositif de positionnement d'une busette (2) à l'ouverture réglable placée dans le fond d'un réservoir (1) en amont du bassin répartiteur (3),

caractérisé en ce qu'on règle le temps de mise sous tension du moteur (8) au moyen d'un dispositif calculateur (12), en ce qu'on introduit dans le dispositif calculateur (12) un signal qui est une fonction de la quantité de liquide dans le bassin répartiteur (3), un signal qui est une fonction de la position d'ouverture de la busette (2), un signal qui est une fonction de la quantité de liquide quittant le bassin répartiteur (3) et un signal qui est fonction du courant du moteur, en ce qu'on mémorise les écarts entre les valeurs de consigne et les valeurs réellement atteintes d'ouverture de la busette (2) et du débit de liquide pour une ouverture de la busette donnée, et de la course de ralentissement que la partie mobile de la busette 2 parcourt après la coupure du courant du moteur et en ce qu'on calcule, à partir de ces données, une consigne de durée de mise sous tension du moteur (8) selon laquelle on commande le moteur (8).

2.   Procédé suivant la revendication 1, caractérisé en ce qu'on élabore dans le dispositif calculateur (12) une valeur de la variation du poids du liquide dans le bassin répartiteur (3) et qu'on tient compte de cette valeur lors du calcul de la consigne de durée de mise sous tension du moteur (8).

3.   Procédé suivant une des revendications 1 ou 2, caractérisé en ce qu'on élabore dans le dispositif calculateur (12) une valeur théorique correspondant à la diminution de la pression du liquide dans le réservoir (1) à l'endroit de la busette (2) et qu'on tient compte de cette valeur théorique lors du calcul de la consigne de durée de mise sous tension du moteur (8)

20.13/1767.

# 0030991

**Office européen des brevets**

## RAPPORT DE RECHERCHE EUROPEENNE

Numéro de la demande

EP 79 87 0033.2

| Catégorie | Citation du document avec indication, en cas de besoin, des parties pertinentes | Revendication concernee |
|---|---|---|
| X | GB - A - 2 001 154 (NIPPON KOKAN K.K.) <br> * revendication; page 2, ligne 59 à page 3, ligne 16; fig. 4 à 6 * <br> -- | 1 |
| | FR - A1 - 2 381 583 (SUMITOMO METAL INDUSTRIES LTD.) <br> * document complet * <br> -- | 1,2 |
| | FR - A1 - 2 387 715 (MITSUBISHI JUKOGYO K.K.) <br> * revendication; page 1, lignes 9 à 14; fig. 1 * <br> -- | 1,2 |
| A | US - A - 3 941 281 (R.D. HIND) <br> -- | |
| A | US - A - 4 009 750 (K. FEKETE et al.) <br> -- | |
| A | US - A - 4 077 457 (M. HASHIO et al.) <br> ---- | |

**DOCUMENTS CONSIDERES COMME PERTINENTS**

**CLASSEMENT DE LA DEMANDE (Int. Cl.)**

G 05 D 9/12
B 22 D 11/16
B 22 D 39/00

**DOMAINES TECHNIQUES RECHERCHES (Int. Cl.)**

B 22 D 11/00
B 22 D 37/00
B 22 D 39/00
G 05 D 9/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| Berlin | 08-08-1980 | BEYER |

OEB Form 1503.1 06.78